# EUROPÄISCHE PATENTSCHRIFT

(11) **EP 2 407 939 B1**
(45) Veröffentlichungstag und Bekanntmachung des Hinweises auf die Patenterteilung: **24.07.2013**
(21) Anmeldenummer: 11401511.8
(22) Anmeldetag: 09.05.2011
(51) Int. Cl.: G07F 7/06, B65G 69/04

(54) **Vorrichtung zur Aufnahme von Leergut**
Device for returning empty containers
Dispositif destiné à la réception de bouteilles consignées

(30) Priorität: 13.07.2010 DE 102010036367
(43) Veröffentlichungstag der Anmeldung: 18.01.2012
(73) Patentinhaber: Wincor Nixdorf International GmbH, 33106 Paderborn (DE)
(72) Erfinder: Heinze, Alexander, 98708 Gehren (DE)
(74) Vertreter: Richly, Erik

(56) Entgegenhaltungen:
- EP-A1- 0 301 978
- EP-A1- 0 498 696
- EP-A1- 1 231 161
- EP-A1- 1 811 468
- BE-A2- 899 420
- DE-A1- 2 856 622
- DE-U1- 9 417 460
- FR-A2- 2 532 344
- GB-A- 2 277 247
- US-A- 4 472 102
- US-A- 4 558 212
- US-A- 5 152 387

## Beschreibung

Die Erfindung betrifft eine Vorrichtung zur Aufnahme von Leergut in einem Behälter, wobei das Leergut an einem Zuführort in einem oberen Bereich des Behälters demselben zuführbar ist.

Das Dokument EP-A-1 231 161 offenbart die Merkmale des Oberbegriffs von Anspruch 1.

Aus der DE 10 2006 007 875 B3 ist eine Vorrichtung zur Aufnahme von Leergut in einem Behälter bekannt, die ein bügelförmiges Verteilelement umfasst. Das bügelförmige Verteilelement ist mittels eines Elektromotors um eine Drehachse verschwenkbar ausgebildet, so dass es mittels einer Schwenkbewegung durch das in dem Behälter befindliche und einen Schüttgutkegel ausbildende Leergut eine Vergleichmäßigung der Leergutoberfläche im Behälter bewirken und somit den Füllungsgrad des Behälters erhöhen kann. Die bekannte Vorrichtung ermöglicht eine optimale Verteilung des Leergutes in dem Behälter. Nachteilig an der bekannten Vorrichtung ist jedoch, dass für das Verschwenken des bügelförmigen Verteilelementes in dem Behälter ein relativ großer Kraftaufwand erforderlich ist. Hierzu wird ein elektrischer Antrieb eingesetzt, der eine Ansteuerung erfordert, was einen erhöhten Kostenaufwand bedingt.

Aufgabe der vorliegenden Erfindung ist es daher, eine Vorrichtung zur Aufnahme von Leergut in einem Behälter derart weiterzubilden, dass mit relativ geringem Aufwand ein relativ hoher Füllungsgrad des Behälters mit Leergut gewährleistet ist.

Anspruch 1 offenbart die Erfindung.

Bevorzugte Ausführungsbeispiele sind in der Ansprüchen 2-8 offenbart.

Der besondere Vorteil der Erfindung besteht darin, dass lediglich durch ein beweglich gelagertes Ableitelement ein wirkungsvolles Verteilen des Leergutes in einem Behälter (Container) gewährleistet ist, wobei insbesondere die Ausbildung eines Schüttgutkegels verhindert wird. Das Ableitelement ist in einem oberen Bereich des Behälters an einem Zuführort angeordnet, an dem das Leergut dem Behälter zugeführt wird. Durch die bewegliche Anordnung des Ableitelementes kann das zugeführte Leergut in Abhängigkeit von der Bewegungsrichtung desselben und/oder von dem Füllungsgrad des Behälters an unterschiedliche Orte innerhalb des Behälters umgelenkt werden. Hierdurch wird der Ausbildung eines Schüttgutkegels entgegengewirkt. Vorteilhaft ermöglicht die erfindungsgemäße Vorrichtung einen erhöhten Füllstand des Behälters, da das Leergut nicht stets an den gleichen Ort innerhalb des Behälters abgelegt wird, sondern an unterschiedlichen Orten.

Nach einer bevorzugten Ausführungsform der Erfindung ist das Ableitelement schwenkbar um eine horizontale Drehachse gelagert. Das Ableitelement kann somit zumindest kurzzeitig mehrere Schwenkpositionen einnehmen, so dass das zugeführte Leergut nach Abprallen an dem Ableitelement in unterschiedliche Richtungen weitergeleitet wird. Beispielsweise kann aufgrund der Schwenkbewegung des Ableitelementes ein Stoßimpuls auf das herabfallende Leergut ausgeübt werden, so dass das Leergut in eine "leere Ecke" des Behälters wegkatapultiert wird. Die Schwenkbewegung des Ableitelementes wird durch ein an das Ableitelement anschlagendes, vorher herabgefallenes Leergut in Gang gesetzt.

Nach einer Weiterbildung der Erfindung ist das Ableitelement zu beiden Seiten einer aufgrund seines Eigengewichtes eingenommenen mittleren Ruheposition hin- und herschwingbar gelagert. Vorteilhaft kann die durch Auftreffen eines Leeguts auf das Ableitelement erzeugte Schwingungsenergie dazu genutzt werden, ein nachfolgend auf das Ableitelement treffendes Leergut unter Veränderung seiner Bewegungsrichtung in einen Bereich des Behälters umzulenken, der entfernt von dem Bereich ist, in dem das vorher zugeführte Leergut geleitet worden ist. Vorteilhaft kann hierdurch eine zufällig herbeigeführte Bewegungsbahn des Leergutes erzeugt werden, die abhängig ist von dem Gewicht und/oder der Orientierung und/oder der Größe und/oder der zugeführten Bewegungsrichtung des Leergutes und/oder vom Füllungsgrad des Behälters. Vorteilhaft kann hierdurch eine Vergleichmäßigung der sich im Behälter einstellenden Schüttgutoberfläche bzw. Erhöhung des Füllungsgrades des Behälters erzielt werden.

Nach einer Weiterbildung der Erfindung ist das Ableitelement derart geformt und/oder relativ zu dem zugeführten Leergut angeordnet, dass es durch Auftreffen des Leergutes auf eine Ableitfläche des Ableitelementes aus der Ruheposition in eine Pendelbewegung überführt wird. Diese Pendelbewegung dauert so lange an, bis ein nächstes Leergut auf das Ableitelement bzw. der Ableitfläche auftrifft. Durch diesen Stoßimpuls wird eine veränderte Pendelbewegung des Ableitelementes bewirkt, da das nachfolgende Leergut in der Regel nicht die gleiche Formgebung und/oder Größe und/oder Gewicht aufweist bzw. nicht in gleicher Weise auf das Ableitelement auftrifft. Über einen gewissen Zeitraum werden somit unterschiedliche Pendelbewegungen des Ableitelementes "induziert", was zur Folge hat, dass das auftreffende Leergut in unterschiedliche Bewegungsrichtungen abgeleitet wird. Vorteilhaft kann hierdurch auf einfache Weise ein erhöhter Füllungsgrad des Behälters bewirkt werden.

Nach einer Weiterbildung der Erfindung ist das Ableitelement schaufelförmig ausgebildet mit einer in der Ruheposition des Ableitelementes in einem spitzen Winkel zur Vertikalebene verlaufenden Ableitfläche. Durch die in der Ruheposition des Ableitelementes schräg verlaufende Ableitfläche ist sichergestellt, dass beim Herabfallen des Leergutes dieses stets auf die Ableitfläche trifft und somit abgelenkt werden kann.

Nach einer Weiterbildung der Erfindung weist die Ableitfläche in einem unteren Bereich derselben einen Abschlussabschnitt auf, der sich in der Ruheposition des Ableitelementes in horizontaler Richtung und/oder aus einer Horizontalebene erhebend erstreckt. Der Abschlussabschnitt ermöglicht ein gezieltes Auftreffen des Leergutes auf der Ableitfläche, so dass es kurzzeitig gehalten und dann nach Ausschwenken des Ableitelementes zur Seite hin unter Ausführung einer Kippbewegung zur Seite hin "weggeschleudert" werden kann.

Nach einer Weiterbildung der Erfindung ist das Ableitelement in einem Rücknahmeautomaten für Leergut integriert angeordnet, wobei es sich vorzugsweise in einem Bereich zwischen einem das Volumen des Leergutes komprimierenden Kompaktierer und dem das Leergut sammelnden Behälter angeordnet ist. Vorteilhaft ist das Ableitelement relativ einfach nachrüstbar, da es lediglich im Bereich der Zuführöffnung des Behälters an dem Kompaktierer oder an dem Behälter angelenkt werden braucht.

Nach einer Weiterbildung der Erfindung ist eine Ableitfläche des Ableitelementes in der Ruheposition desselben in Richtung einer Vertikalebene orientiert angeordnet, in der sich die Zuführöffnung bzw. ein Auslass des Kompaktierers befindet. Das schaufelförmige Ableitelement kann somit sicher das zugeführte bzw. herabgefallene Leergut erfassen und in dem Behälter verteilen.

Nach einer weiteren Ausführungsform der Erfindung kann dem Ableitelement eine Feder zur Rückstellung in die Ruheposition oder ein Motor zum gesteuerten Verteilen des Leergutes in Abhängigkeit von dem Füllstand des Behälters zugeordnet sein. Vorteilhaft kann hierdurch eine gezieltere Verteilung des Leergutes innerhalb des Behälters gewährleistet sein.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: eine schematische Seitenansicht einer erfindungsgemäßen Vor-richtung mit einem schwenkbar angeordneten Ableitelement in ei-nem oberen Bereich eines Behälters zur Verteilung von Leergut und
- Figur 2: eine perspektivische Ansicht des Ableitelementes von vorne.

Eine Vorrichtung zur Aufnahme von Leergut 1, wie zum Beispiel leere Getränkedosen oder -flaschen aus Metall oder Kunststoff, ist in einem nicht dargestellten Rücknahmeautomaten integriert angeordnet. Im Wesentlichen weist der Rücknahmeautomat eine Eingabeeinheit zur Eingabe des Leergutes durch den Kunden, eine Datenverarbeitungseinrichtung zur Ermittlung des Pfandbetrags, einen Kompaktierer 2 zum Komprimieren des Leergutes 1 in eine flache Form sowie einen Behälter 3 zum Sammeln des komprimierten Leergutes auf.

Der Kompaktierer 2 ist üblicherweise in vertikaler Richtung oberhalb des oben offenen Behälters 3 angeordnet. Der Behälter 3 weist in üblicherweise eine Bodenwand 4, eine aufrechte erste Seitewand 5 sowie eine gegenüberliegende Seitenwand 5' auf. Vorzugsweise ist der Behälter 3 quaderförmig ausgebildet und weist an der Bodenwand 4 nicht dargestellte Rollen auf, so dass er nach Erreichen eines vorgegebenen Füllungsgrades an Leergut aus dem Rücknahmeautomaten herausfahrbar und nach Leerung wieder hineinfahrbar ist. Ferner weist die erfindungsgemäße Vorrichtung ein um eine horizontale Drehachse D schwenkbar gelagertes Ableitelement 6 auf, das in einem oberen Bereich oder oberhalb des Behälters 3 schwenkbar gelagert ist.

Das Ableitelement 6 ist schaufelförmig ausgebildet und weist eine zwischen zwei gegenüberliegenden Lagerplatten 7 abgeschrägt verlaufende Ableitfläche 8 auf. An einem unteren freien Endbereich der Ableitfläche 8 ist ein vorzugsweise abgeknickter Abschlussabschnitt 9 vorgesehen, der sich in einer Ruheposition R des Ableitelementes 6 in horizontaler Richtung und/oder aus einer horizontalen Ebene H erhebend erstreckt. Die Horizontalebene H schneidet eine in vertikaler Richtung unterste Scheitellinie der Ableitfläche 8.

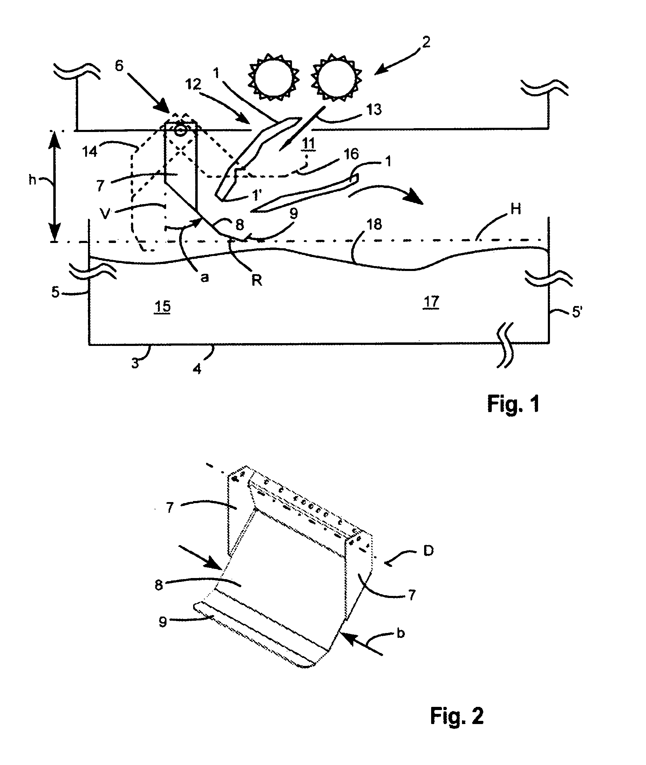

In der Ruheposition R des Ableitelementes 6, siehe durchgezogene Linie in Figur 1 bzw. siehe in Figur 2, erstreckt sich die Ableitfläche 8 im Wesentlichen flächig unter einem spitzen Winkel a zu einer Vertikalebene V. Ausgehend von einer Vertikalebene, in der die Drehachse D verläuft, ist die Ableitfläche 8 hin zu einem Zuführort 11 orientiert, an dem über einen Auslass 12 des Kompaktierers 2 das Leergut 1 vorzugsweise unter Führung in Bewegungsrichtung 13 an den Behälter 3 übergeben wird.

Das Ableitelement 6 ist derart relativ zu dem Auslass 12 angeordnet, dass das Leergut 1 nach dem Verlassen des Kompaktierers 2 infolge seines Eigengewichtes stets auf die Ableitfläche 8 fällt bzw. durch den hierdurch bewirkten Stoß das Ableitelement 6 in eine hin- und herschwingende Pendelbewegung versetzt.

Wird im Anschluss an die Abgabe des Leergutes 1 durch den Kompaktierer 2 dem Behälter 3 kein weiteres Leergut 1 zugeführt, würde die Auslenkung (siehe gestrichelte Linie in Figur 1) der sich um die Drehachse D pendelnden Behälterbewegung nach und nach zurückgehen, bis sich das Ableitelement 6 wieder in der Ruheposition R befindet.

Wird im Anschluss an das die Auslenkung des Ableitelementes 6 bewirkenden Leergut 1 ein weiteres Leergut 1 den Auslass 12 des Kompaktierers 2 verlassen, würde dieses Leergut 1 die Ableitfläche 8 entweder in einer bestimmten Schwenkposition oder - wenn sich das Ableitelement 6 in einer der Seite des Auslasses 12 abgewandten Schwenkposition 14 befindet - gar nicht auf die Ableitfläche 8 treffen. Im letzteren Fall würde das Leergut 1 in einen Aufnahmebereich 15 des Behälters 3 fallen bzw. gelangen, der entfernt von dem Auslass 12 des Kompaktierers 2 angeordnet ist. Würde das Leergut 1 das Ableitelement 6 in einer Schwenkposition 16 treffen, würde das Ableitelement 6 auf das Leergut 1 eine Stoßkraft ausüben, die das Leergut 1 auf eine zu dem ersten Aufnahmebereich 15 gegenüberliegenden zweiten Aufnahmebereich 17 umleitet. Der erste Aufnahmebereich 15 und der zweiten Aufnahmebereich 17 sind vorzugsweise zu beiden Seiten einer vertikalen Mittelebene des Behälters 3 angeordnet.

Gleichzeitig mit dem Auftreffen des Leergutes 1 auf die Ableitfläche 8 würde eine erneute Pendelbewegung induziert, die beim Auftreffen nachfolgenden Leergutes 1 auf die Ableitfläche 8 weitere Stoßkräfte unterschiedlicher Höhe bewirkt, so dass infolge der zufälligen Zuführung des Leergutes 1 zu dem Ableitelement 6 eine Vergleichmäßigung der aus dem Leergut 1 bestehenden Schüttgutoberfläche 18 des Behälters 3 bewirkt wird.

Das Ableitelement 6 ist vorzugsweise aus einem Blechmaterial hergestellt und weist eine solche Breite b auf, dass zumindest in der Ruheposition R des Ableitelementes 6 das vom Kompaktierer 2 zugeführte Leergut 1 stets auf die Ableitfläche 8 des Ableitelementes 6 auftrifft.

Vorzugsweise ist die Drehachse D des Ableitelementes 6 bzw. eine Höhe h des Ableitelementes 6 derart gewählt, dass das Leergut 1 in der stabilen Ruheposition R des Ableitelementes 6 nach Verlassen des Auslasses 12 oder kurz vor Verlassen des Auslasses 12 auf die Ableitfläche 8 stößt. Im letzteren Fall kann die Vorschubkraft des Kompaktierers 2 dazu ausgenutzt werden, dass Ableitelement 6 nach insbesondere Anlage eines freien Endes 1' des Leergutes 1 an dem gebogenen oder abgeknickten Abschlussabschnitt 9 in Richtung der ersten Seitenwand 5 auszulenken. Vorzugsweise ist das Ableitelement 6 in einem Bereich zwischen der ersten Seitenwand 5 und der vertikalen Mittelebene des Behälters 3 angeordnet, also in einer nicht mittigen Lage zu dem Behälter 3 angeordnet.

Hat der Füllstand des Behälters 3 derart zugenommen, dass sich das Ableitelement 6 nicht mehr verschwenken lässt, kann es als Führungsfläche, die zur

Verteilung des Leergutes 1 auf eine Seite bezüglich einer durch die Drehachse D verlaufenden Vertikalachse dienen. Darüber hinaus kann es in einer hinteren Lage verhindern, dass sich der entstehende Schüttgutkegel über einen oberen Rand des Behälters 3 hinausschiebt. Ein Füllstandssensor (Lichtschrankensensor) liegt direkt seitlich neben dem Kompaktierer 2, so dass nach Ausfüllen der Ecken des Behälters 3 durch das Leergut 1 das nachfolgende Leergut 1 in den durch den Füllstandssensor detektierten Bereich des Behälters 3 geführt wird, was das Signal "Behälter voll" durch den Füllstandssensor auslöst.

Nach einer nicht dargestellten alternativen Ausführungsform der Erfindung kann das Ableitelement 6 auch bogenförmig oder wellenförmig oder zickzackförmig statt eben ausgebildet sein.

Nach einer weiteren nicht dargestellten Ausführungsform kann dem Ableitelement 6 eine Feder zur Rückstellung in die Ruheposition R oder ein Motor zum gesteuerten Verteilen des Leergutes 1 in Abhängigkeit von dem Füllstand des Behälters 3 zugeordnet sein. Hierdurch kann eine gezielte Bewegung des Ableitelementes 6 bewirkt werden, was allerdings den konstruktiven Aufwand erhöht.

### Bezugszeichenliste

- 1: Leergut
- 1': Ende
- 2: Kompaktierer
- 3: Behälter
- 4: Bodenwand
- 5: Seitenwände
- 6: Ableitelement
- 7: Lagerplatten
- 8: Ableitfläche
- 9: Abschlussabschnitt
- 10 11: Zuführort
- 12: Auslass
- 13: Bewegungsrichtung
- 14: Schwenkposition
- 15: erster Aufnahmebereich
- 16: Schwenkposition
- 17: zweiter Aufnahmebereich
- 18: Schüttgutoberfläche
- a: spitzer Winkel
- b: Breite
- h: Höhe
- D: Drehachse

- H: Horizontalebene
- R: Ruheposition
- V: Vertikalebene

## Patentansprüche

1. Vorrichtung zur Aufnahme von Leergut in einem Behälter, wobei das Leergut an einem Zuführort in einem oberen Bereich des Behälters demselben zuführbar ist, wobei an dem Zuführort (11) ein beweglich gelagertes Ableitelement (6) zum Verteilen des Leergutes (1) angeordnet ist, **dadurch gekennzeichnet, dass** das Ableitelement (6) schwenkbar um eine horizontale Drehachse (D) gelagert ist und wobei das Ableitelement (6) zu beiden Seiten einer aufgrund seines Eigengewichtes eingenommenen Ruheposition (R) hin- und herschwingbar gelagert ist.

2. Vorrichtung nach Anspruch 1, **dadurch gekennzeichnet, dass** das Ableitelement (6) derart geformt und/oder relativ zu dem zugeführten Leergut (1) angeordnet ist, dass es durch Auftreffen des Leergutes (1) auf eine Ableitfläche (8) des Ableitelementes (6) aus der Ruheposition (R) in eine Pendelbewegung (14, 16) überführt wird und/oder dass durch Auftreffen des Leergutes (1) auf die Ableitfläche (8) des Ableitelementes (6) die Bewegungsrichtung (13) des Leergutes (1) verändert wird.

3. Vorrichtung nach einem der Ansprüche 1 bis 2, **dadurch gekennzeichnet, dass** das Ableitelement (6) schaufelförmig ausgebildet ist mit einer in der Ruheposition (R) des Ableitelementes (6) in einem spitzen Winkel (a) zu einer Vertikalebene (V) verlaufenden Ableitfläche (8).

4. Vorrichtung nach einem der Ansprüche 1 bis 3, **dadurch gekennzeichnet, dass** die Ableitfläche (8) des Ableitelementes (6) in einem unteren freien Bereich desselben einen Abschlussabschnitt (9) aufweist, der in der Ruheposition (R) des Ableitelementes (6) sich in horizontaler Richtung und/oder sich aus einer Horizontalebene (H) nach oben erstreckt.

5. Vorrichtung nach einem der Ansprüche 1 bis 4, **dadurch gekennzeichnet, dass** das Ableitelement (6) aus einem Blechmaterial hergestellt ist.

6. Vorrichtung nach einem der Ansprüche 1 bis 5, **dadurch gekennzeichnet, dass** der Zuführort (11) durch einen Auslass (12) eines Kompaktierers (2) gebildet ist, wobei der Kompaktierer (2) in einem Rücknahmeautomaten zur Rücknahme des Leergutes (1) angeordnet ist.

7. Vorrichtung nach einem der Ansprüche 1 bis 6, **dadurch gekennzeichnet, dass** die Drehachse (D) des Ableitelementes (6) im Wesentlichen horizontal versetzt zu dem Auslass (12) des Kompaktierers (2) angeordnet ist und dass die Ableitfläche (8) des Ableitelementes (6) in der Ruheposition (R) desselben zu einer den Auslass (12) des Kompaktierers (2) aufweisenden Vertikalebene (V) orientiert verläuft.

8. Vorrichtung nach einem der Ansprüche 1 bis 7, **dadurch gekennzeichnet, dass** dem Ableitelement (6) eine Feder zur Rückstellung in die Ruheposition (R) des Ableitelementes (6) oder ein Motor zum gesteuerten Verteilen des Leergutes (1) in Abhängigkeit von einem Füllstand des Behälters (3) zugeordnet ist.

## Claims

1. Apparatus for receiving empty receptacles in a container, wherein the empty receptacles can be fed to the container at a feed location in an upper region of the container, and wherein a movably mounted diverting element (6), for distributing the empty receptacles (1), is arranged at the feed location (11), **characterized in that** the diverting element (6) is mounted such that it can be pivoted about a horizontal axis of rotation (D), and wherein the diverting element (6) is mounted such that it can swing back and forth to either side of a rest position (R), which it assumes under its own dead weight.

2. Apparatus according to Claim 1, **characterized in that** the diverting element (6) is formed, and/or arranged relative to the empty receptacles (1) fed, such that, as a result of the empty receptacles (1) striking against a diverting surface (8) of the diverting element (6), the latter is made to execute a pendulum movement (14, 16) from the rest position (R), and/or **in that**, as a result of the empty receptacles (1) striking against the diverting surface (8) of the diverting element (6), the movement direction (13) of the empty receptacles (1) is changed.

3. Apparatus according to either of Claims 1 and 2, **characterized in that** the diverting element (6) is of shovel-like design with a diverting surface (8) which, in the rest position (R) of the diverting element (6), runs at an acute angle (a) in relation to a vertical plane (V).

4. Apparatus according to one of Claims 1 to 3, **characterized in that** the diverting surface (8) of the diverting element (6), in a lower free region of the latter, has a terminating portion (9) which, in the rest position (R) of the diverting element (6), extends in the horizontal direction and/or extends upwards out of a horizontal plane (H).

5. Apparatus according to one of Claims 1 to 4, **characterized in that** the diverting element (6) is produced from a sheet-metal material.

6. Apparatus according to one of Claims 1 to 5, **characterized in that** the feed location (11) is formed by an outlet (12) of a compactor (2), wherein the compactor (2) is arranged in an automatic recovery machine for recovering the empty receptacles (1).

7. Apparatus according to one of Claims 1 to 6, **characterized in that** the axis of rotation (D) of the diverting element (6) is offset essentially horizontally in relation to the outlet (12) of the compactor (2), and **in that** the diverting surface (8) of the diverting element (6), in the rest position (R) of the latter, is oriented in line with a vertical plane (V) containing the outlet (12) of the compactor (2).

8. Apparatus according to one of Claims 1 to 7, **characterized in that** the diverting element (6) is assigned a spring, for restoring the diverting element (6) into the rest position (R), or a motor, for distributing the empty receptacles (1) in a controlled manner in dependence on a filling level of the container (3).

## Revendications

1. Dispositif destiné à recevoir des produits vides dans un contenant, les produits vides pouvant être acheminés au dispositif au niveau d'un lieu d'acheminement dans une région supérieure du contenant, un élément de déflexion (6) monté de manière mobile pour répartir les produits vides (1) étant disposé au niveau du lieu d'acheminement (11), **caractérisé en ce que** l'élément de déflexion (6) est monté de manière à pouvoir pivoter autour d'un axe de rotation horizontal (D) et l'élément de déflexion (6) étant monté de manière à pouvoir pivoter d'avant en arrière des deux côtés d'une position de repos (R) adoptée du fait de son propre poids.

2. Dispositif selon la revendication 1, **caractérisé en ce que** l'élément de déflexion (6) est formé et/ou est disposé par rapport aux produits vides acheminés (1) de telle sorte qu'il soit amené à effectuer un mouvement pendulaire (14, 16) hors de la position de repos (R) par l'impact des produits vides (1) sur une surface de déflexion (8) de l'élément de déflexion (6) et/ou que le sens de déplacement (13) des produits vides (1) soit modifié par l'impact des produits vides (1) sur la surface de déflexion (8) de l'élément de déflexion (6).

3. Dispositif selon l'une quelconque des revendications 1 à 2, **caractérisé en ce que** l'élément de déflexion (6) est réalisé sous forme de pale avec une surface de déflexion (8) s'étendant dans la position de repos (R) de l'élément de déflexion (6) suivant un angle aigu (a) par rapport à un plan vertical (V).

4. Dispositif selon l'une quelconque des revendications 1 à 3, **caractérisé en ce que** la surface de déflexion (8) de l'élément de déflexion (6) présente, dans une région inférieure libre de l'élément de déflexion, une portion de terminaison (9) qui s'étend dans la position de repos (R) de l'élément de déflexion (6) dans la direction horizontale et/ou qui s'étend vers le haut depuis un plan horizontal (H).

5. Dispositif selon l'une quelconque des revendications 1 à 4, **caractérisé en ce que** l'élément de déflexion (6) est fabriqué en un matériau en tôle.

6. Dispositif selon l'une quelconque des revendications 1 à 5, **caractérisé en ce que** le lieu d'acheminement (11) est formé par une sortie (12) d'un dispositif de compactage (2), le dispositif de compactage (2) étant disposé dans un automate de recyclage pour le recyclage des produits vides (1).

7. Dispositif selon l'une quelconque des revendications 1 à 6, **caractérisé en ce que** l'axe de rotation (D) de l'élément de déflexion (6) est disposé de manière décalée essentiellement horizontalement par rapport à la sortie (12) du dispositif de compactage (2) et **en ce que** la surface de déflexion (8) de l'élément de déflexion (6), dans la position de repos (R) de ce dernier, s'étend de manière orientée vers un plan vertical (V) présentant la sortie (12) du dispositif de compactage ( 2 ) .

8. Dispositif selon l'une quelconque des revendications 1 à 7, **caractérisé en ce que** l'élément de déflexion (6) est associé à un ressort de rappel dans la position de repos (R) de l'élément de déflexion (6) ou à un moteur pour la répartition commandée des produits vides (1) en fonction d'un niveau de remplissage du contenant (3).
